# EUROPEAN PATENT APPLICATION

(11) **EP 1 178 335 A1**
(43) Date of publication of application: **06.02.2002**
(21) Application number: 01902740.8
(22) Date of filing: 02.02.2001
(51) Int. Cl.: G02B 5/22, H01J 11/02, G09F 9/00

(54) **OPTICAL FILTER AND PLASMA DISPLAY PANEL**

(30) Priority: 14.02.2000 JP 2000035541
(71) Applicant: Bridgestone Corporation, Tokyo 104-8340 (JP)
(72) Inventor: SUGIMACHI, Masato, Kodaira-shi, Tokyo 187-0031 (JP)
(74) Representative: Albrecht, Thomas, Dr.
(86) International application number: JP0100747
(87) International publication number: WO0159489

(57) **Abstract**

An optical filter includes a coloring matter which has an absorption peak in a wavelength range of 570 to 600nm. The optical filter is mounted in the front of a PDP. The spectrums of the PDP shall be corrected by the filter, so that the PDP can be improved in color purity and color reproducibility.

## Description

### Field of the Invention

The present invention relates to an optical filter, such as an electromagnetic-wave shielding light-transparent plate which is mounted in the front of a plasma display panel (hereinafter, the plasma display panel will be referred to as the "PDP" and the electromagnetic-wave shielding light-transparent plate for the PDP will be referred to as a "PDP filter."), and a PDP which is mounted with the filter in the front thereof.

### Background of the invention

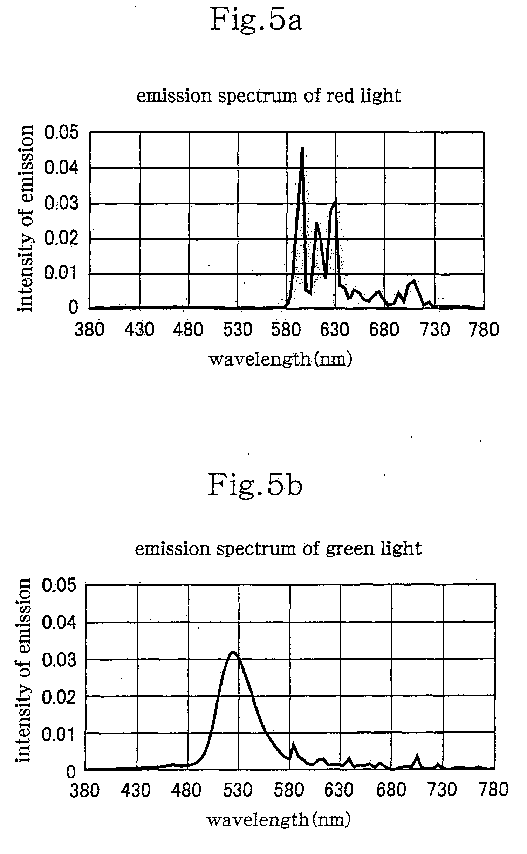

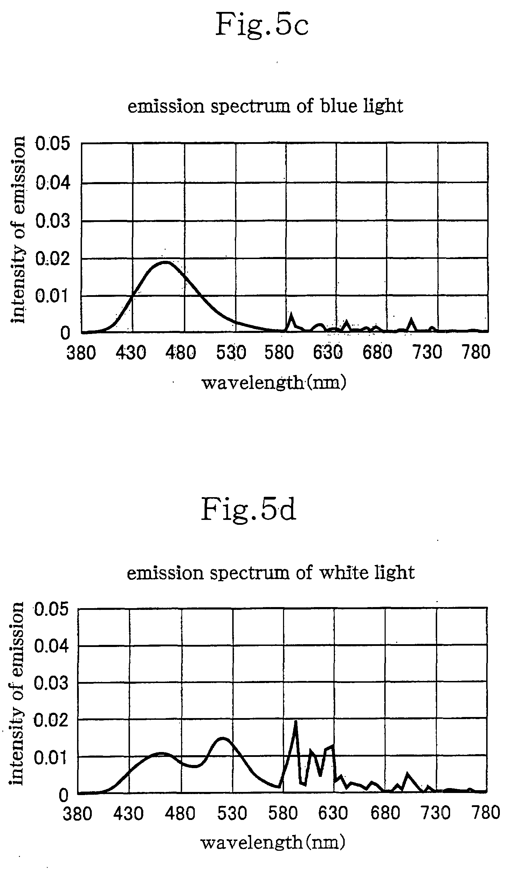

The PDP displays colors by emitting plasma having different emission spectrums, or by controlling the degrees of emission of red light (R), green light (G), blue light (B), and white light (W), which is developed by total emission of those three colors of light, respectively as shown in Figs. 5a through 5d.

Although the PDP is usually mounted with a filter to block near infrared rays or electromagnetic waves in the front, no filter has served to correct the emission spectrums of the PDP so far.

As can be apparent from Figs. 5a through 5d, the emission spectrum of red light has peaks not only at a wavelength of about 630nm corresponding to pure red but also at a wavelengths of about 590 to about 600. Light having a wavelength of about 590nm is almost orange in color and causes deterioration in the color reproducibility of the PDP. Even in the emission spectrums of green light and blue light, red-tinged noises having long wavelengths worsen the color reproducibility. These features of the spectrums are peculiar to the plasma emission and it is impossible to control the aspects of the plasma emission by modification in the design of the PDP itself.

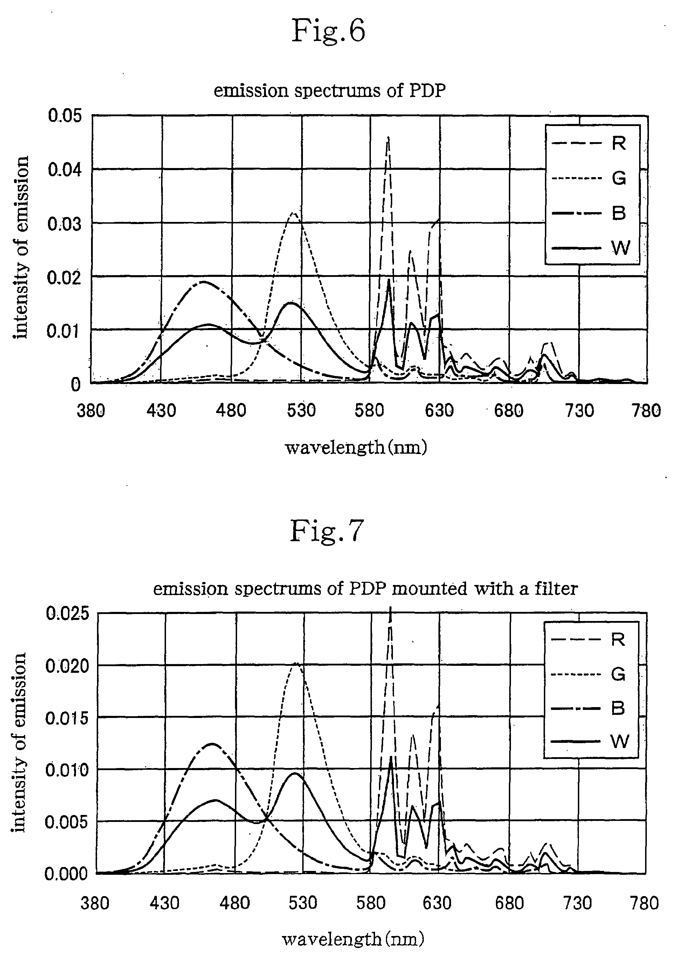

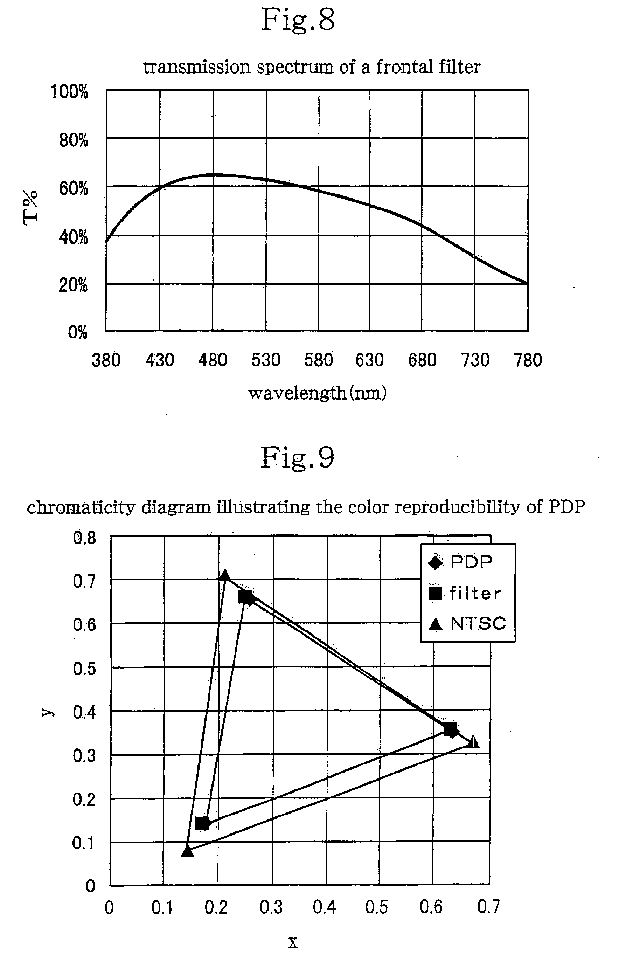

A conventional PDP filter is not for correcting the emission spectrum but has a transmission spectrum shown in Fig.8. When the conventional PDP filter having such a transmission spectrum is mounted in the front of the PDP which displays such emission spectrums as shown in Fig.6, the emission spectrums of the PDP are almost equal both before and after mounting the filter as shown in Fig.7, and the color reproducibility of the PDP mounted with the conventional PDP filter is accordingly lowered as shown in Fig.9. In Fig.9 "▲ NTSC" illustrates the ideal range of the color reproducibility of the PDP in state where noises are fully removed, "◆" illustrates the range of the color producibility of the PDP alone, and "■" illustrates that of the PDP mounted with the conventional PDP filter. It is apparent from Fig.9 that the range of color producibility of the PDP mounted with the conventional PDP filter is much narrower than the ideal one.

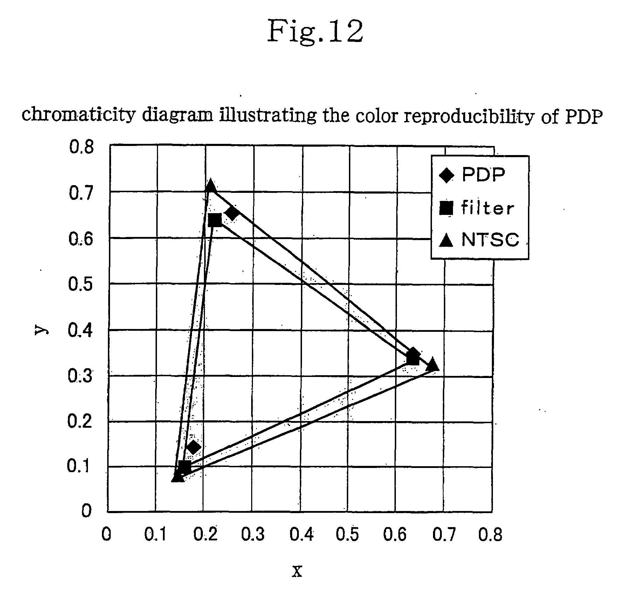

In the chromaticity diagrams of Fig.9 and Fig.12, the x-coordinate is expressed by the following formula: x = X / (X + Y + Z), the y-coordinate is expressed by the following formula: y = Y / (X + Y + Z), and Z=1-x-y, wherein X (red), Y (green) and Z (blue) are those of the XYZ luminecent color specification. As the value of the x-coordinate increases, the color becomes more reddish, as the value of y-coordinate increases, the color becomes more greenish, and as the values of both the x-coordinate and the y-coordinate decrease, the color becomes more bluish.

### Object and Summary of the Invention

It is an object of the present invention to solve conventional problems as above and to provide an optical filter which can correct the emission spectrum of a PDP so as to improve color purity and color reproducibility, and it is another object of the present invention to provide a PDP equipped with the optical filter.

The optical filter of the present invention is to be mounted in the front of a PDP and includes a coloring matter having an absorption peak in a wavelength range of 570 to 600nm.

The coloring matter having an absorption peak in the wavelength range of 570 to 600nm cancels the peaks of the spectrum of red light in the wavelength range of about 590 to 600nm which causes deterioration in the color purity and the color reproducibility. The coloring matter improves the purity of the spectrum of red light and also removes the red tinged noises having long wavelengths even from the spectrums of green light and blue light, so as to improve the color purity and the color reproducibility.

The PDP of the present invention is mounted with the optical filter of the present invention in the front, so that it displays excellent color purity and color reproducibility.

### Brief Description of the Drawings

Fig.1 is a graph showing the emission spectrums of the PDP mounted with a filter produced in the following Example 1.
Fig.2 is a graph showing the transmission spectrum of the filter produced in the following Example 1.
Fig.3 is a graph showing the color reproducibility of the PDP mounted with the filter produced in the following Example 1.
Fig.4a is a graph showing the absorption spectrum of a coloring matter A employed in the following Example 1, and Fig.4b is a graph showing the absorption spectrum of a coloring matter B employed in the following Comparative Example 1.
Fig.5a, Fig.5b, Fig.5c and Fig.5d are graphs showing the red, green, blue and white emission spectrums of the PDP respectively.
Fig.6 is a graph showing the emission spectrums of the PDP.
Fig.7 is a graph showing the emission spectrums of the PDP mounted with a conventional filter.
Fig.8 is a graph showing the transmission spectrum of the conventional filter.
Fig.9 is a chromaticity diagram showing the color reproducibility of the PDP mounted with a conventional filter.
Fig.10 is a graph showing the transmission spectrum of a filter produced in the following Comparative Example 1.
Fig.11 is a graph showing the emission spectrums of the PDP mounted with the filter produced in the following Comparative Example 1
Fig.12 is a graph showing the color reproducibility of the PDP mounted with the filter produced in the following Comparative Example 1.

### Detailed Description of the Preferred Embodiments

The coloring matter employed in the present invention has an absorption peak in the wavelength range from 570 to 600nm, preferably from 575 to 595nm, and most preferably at a wavelength of about 590nm, and has a sharp peak in its absorption spectrum with the half-width of 40nm or less.

Examples of the coloring matter are cyanine-based dyestuffs, azulenium-based dyestuffs, squalium-based dyestuffs, diphenylmethane-based dyestuffs, triphenylmethane-based dyestuffs, oxazine-based dyestuffs, azine-based dyestuffs, thiopyrylium-based dyestuffs, viologen-based dyestuffs, azo-based dyestuffs, metal azo-based complex dyestuffs, bisazo-based dyestuffs, naphthoquinone-based dyestuffs, anthraquinone-based dyestuffs, perylene-based dyestuffs, indanthrone-based dyestuffs, phthalocyanine-based dyestuffs, nitroso-based dyestuffs, metal dithiol-based dyestuffs, indoaniline-based dyestuffs, and quinoline-based dyestuffs.

In an embodiment of the present invention, the PDP filter has an electromagnetic-wave-blocking layer such as a conductive mesh member and a transparent conductive film, wherein a glass sheet or a resin film to be used as a transparent substrate, and functional films such as a near-infrared-blocking film and an anti-reflective film are laminated on the electromagnetic-wave-blocking layer with adhesives or self-adhesive materials. The adhesives or the self-adhesive materials may include the above coloring matter. The films such as the transparent conductive film, the near-infrared-blocking film and the anti-reflective film may include the above coloring matter. A film having a transparent base film and a transparent resin coated thereon and including the above coloring matter may be laminated on the filter.

When the content of the coloring matter is too low, the coloring matter cannot give an adequate effect of improving the color reproducibility, on the other hand, when it is too high, the coloring matter can adversely affect the color balance of the filter. Thus, the content of the coloring matter is preferable to be 10⁻⁵ to 1g/m² in the filter.

The PDP having the filter of the present invention is improved in the color reproducibility.

Hereinafter examples and a comparative example are described.

### Example 1

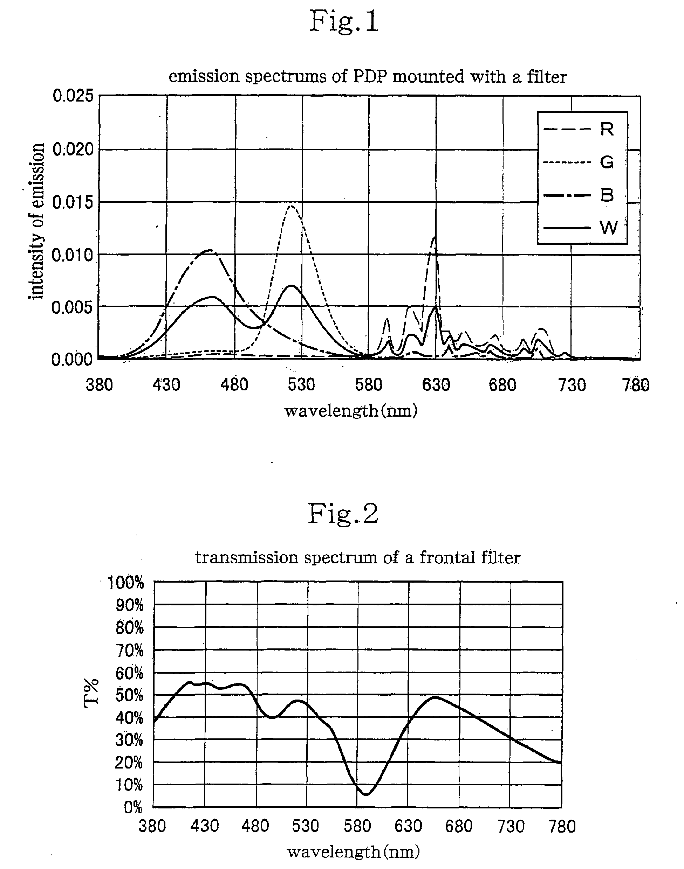

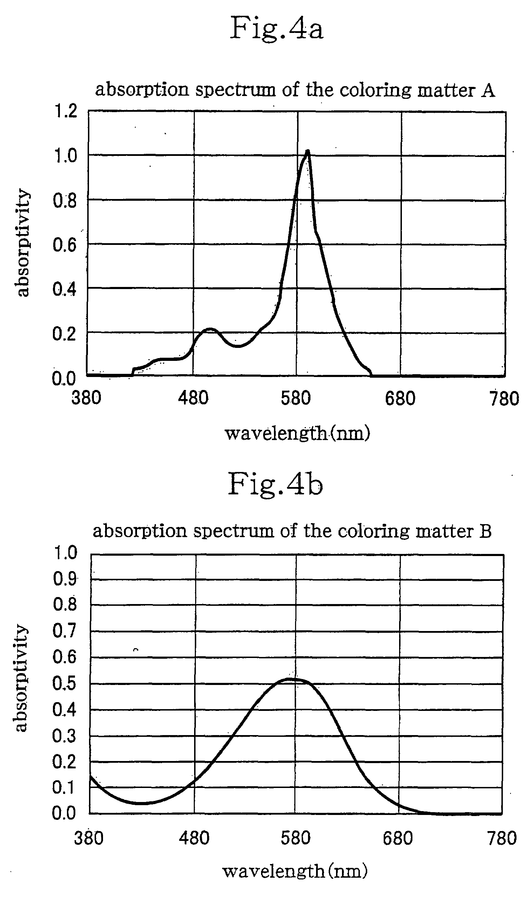

A cyanine-based dyestuff A having an absorption spectrum shown in Fig.4a was employed as the coloring matter. In Fig.4 the wavelength of the absorption peak is 590nm and the half-width of the peak is 37nm. The dyestuff A was added to a transparent acrylic adhesive material in an amount of 0.5% by weight, and then the transparent acrylic adhesive material was formed into a film having a thickness of 25 µm. The adhesive film was laminated onto a transparent conductive film. The transparent conductive film with the adhesive film was laminated with a glass substrate and a near-infrared-absorbing film whereby a PDP filter was composed. This PDP filter includes the dyestuff A in an amount of 0.13 g/m² and has a transmission spectrum shown in Fig.2.

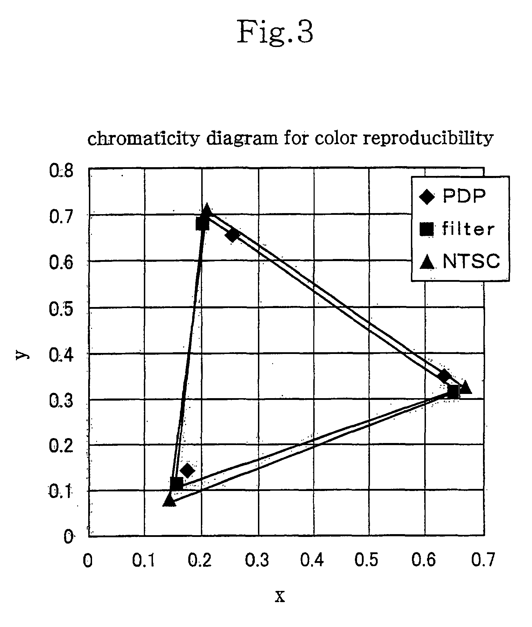

This PDP filter was mounted in the front of a PDP ("PDW 4203J-S" manufactured by Fujitsu General Industrial) to measure the plain-color emission spectrums of red light, green light and blue light, respectively, and the chromaticity coordinates. The results of the measurement are shown in Figs.1 and 3. Figs.1 and 3 show that the range of the color reproducibility of light transmitted through the filter approaches the ideal range of the color reproducibility of the emission devices of the PDP.

### Example 2

A methacrylic resin (PMMA) and the dyestuff A employed in the above Example 1 were dissolved in a solution composed principally of tetrahydrofuran. The solution was, then, applied uniformly onto a polyester film having a thickness of 100 µm and dried to form a 5 µm thick film including the dyestuff A.

This film includes the dyestuff A of 0.13g/m². It was shown that this film has about the same transmission spectrum as that of the PDP filter of Example 1.

This filter was mounted in the front of the PDP to measure the plain-color emission spectrums of red light, green light and blue light, respectively, and the chromaticity coordinates. The results show that the range of the color reproducibility of the film also approaches the ideal range of the color reproducibility of the emission devices of the PDP.

### Comparative Example 1

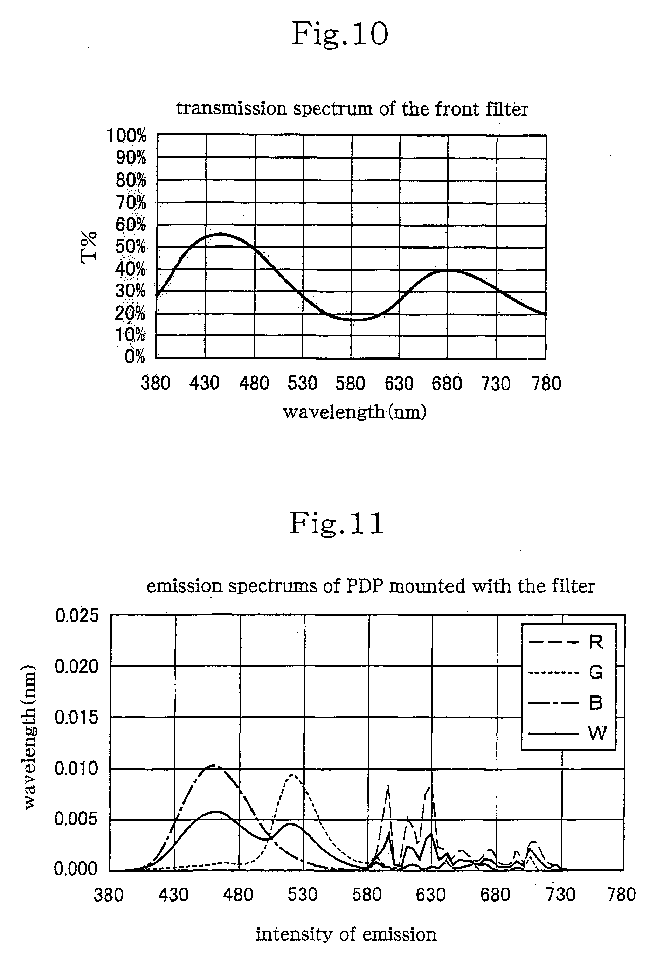

A filter was composed in the same way as that of Example 1 except that a dyestuff B having a broad absorption peak at a wavelength of 573nm, of which the half-width is 129nm, as shown in Fig.4b. The transmission spectrum of this filter is shown in Fig.10.

This filter was mounted in the front of the PDP in the same way as Example 1 to measure the emission spectrums and the chromaticity coordinates. The results are shown in Figs.11 and 12. It is apparent that this filter is inferior in the color reproducibility to that of Example 1 which includes the dyestuff A.

### Industrial Capability

As described above, according to the present invention, the spectrums of the PDP can be fully corrected so as to improve the color purity and the color reproducibility remarkably, and thus a high-quality PDP can be provided.

## Claims

1. An optical filter to be mounted in a front of a PDP, wherein the filter includes a coloring matter having an absorption peak at a wavelength range of 570 to 600nm.

2. An optical filter as claimed in claim 1, wherein said coloring matter has an absorption peak at a wavelength range of 575 to 595nm.

3. An optical filter as claimed in claim 2, wherein said coloring matter has an absorption peak at a wavelength of about 590nm.

4. An optical filter as claimed in any one of claims 1 through 3, wherein the half-width of the absorption peak of said coloring matter is 40nm or less.

5. An optical filter as claimed in any one of claims 1 through 4, wherein said filter has an adhesive layer or a self-adhesive layer including said coloring matter.

6. An optical filter as claimed in any one of claims 1 through 5, wherein said filter has electromagnetic-wave-blocking characteristics.

7. An optical filter as claimed in any one of claims 1 through 6, wherein said filter includes said coloring matter with 10⁻⁵ to 1 g/m² per unit area.

8. A plasma display panel which is equipped with said optical filter as claimed in any one of claims 1 through 7.
